# EUROPEAN PATENT APPLICATION

(11) **EP 4 686 025 A1**
(43) Date of publication of application: **28.01.2026**
(21) Application number: 24306250.2
(22) Date of filing: 24.07.2024
(51) Int. Cl.: H02H 9/00

(54) **PREDICTIVE ACTIVE PRE-CHARGE FOR ELECTRIC VEHICLES**

(71) Applicant: NXP USA, Inc., Austin TX 78735 (US)
(72) Inventor: Lovas, Ivan, 31023 Toulouse (FR); Perruchoud, Philippe Jean-Pierre, 31023 Toulouse (FR)
(74) Representative: Miles, John Richard

(57) **Abstract**

A device and method for actively pre-charging an inverter capacitor includes a switched bypass pre-charging path having one or more power switches for selectively connecting and disconnecting the battery and the inverter capacitor in response to one or more first switching control signals having a configurable duty cycle, where one or more processor units are configured with a predictive active pre-charging module to control active pre-charging of the inverter capacitor from the battery by using low-frequency measurements of a battery voltage and an inverter capacitor voltage to periodically determine the configurable duty cycle for the one or more first switching control signals that is applied over a plurality of specified charging intervals to actively pre-charge the inverter capacitor to the battery voltage.

## Description

### BACKGROUND OF THE INVENTION

### Field of the Invention

The present disclosure is directed in general to the field of electrical circuits. In one aspect, the present disclosure relates to a method, apparatus, and system for pre-charging a capacitor from one or more batteries.

### Description of the Related Art

Battery-powered systems are widely used in varied applications including electric vehicles, hybrid vehicles, energy storage systems, motor inverters, and other applications which require battery sources for electrical power. In various applications, two or more rechargeable battery cells may be used to store electrical energy by connecting several battery cells in parallel to form a battery pack. In addition, several battery packs (each comprising a plurality of cells connected in parallel) may be connected in series. In such applications, the battery power supply systems may store a very large voltage that is applied to an electrical circuit, such as a power inverter module, which is powered by the stored electrical energy. Unfortunately, an abrupt application of a large battery voltage to an electrical circuit can damage electrical circuit elements, such as when a large current pulse or voltage damages a switch or capacitor or conductor in the electrical circuit. To prevent circuit damage from large current pulses or voltages, pre-charging systems have been developed which gradually increase the voltage/current levels of an electrical circuit until they reach a voltage or current level for the battery supply system. However, existing pre-charging solutions suffer from a variety of performance and design drawbacks. For example, passive pre-charge systems have been developed which require specialized and expensive components, such as bulky resistors and contactors. In addition, active pre-charge systems have been developed to provide improved performance, but they typically require switched mode power supply (SMPS) control hardware components and a high-voltage isolated power supply, adding component cost and complexity. As seen from the foregoing, existing pre-charge solutions and systems for preventing electrical circuit damage from battery power supplies are extremely difficult at a practical level by virtue of the challenges with providing efficient, low-cost pre-charge solutions with reduced component requirements, lower system costs, and less circuit complexity. Further limitations and disadvantages of conventional processes and technologies will become apparent to one of skill in the art after reviewing the remainder of the present application with reference to the drawings and detailed description which follow.

### BRIEF DESCRIPTION OF THE DRAWINGS

The present invention may be understood, and its numerous objects, features and advantages obtained, when the following detailed description of a preferred embodiment is considered in conjunction with the following drawings.
Figure 1 depicts a simplified schematic circuit diagram of a passive pre-charge circuit for charging a DC link capacitor from one or more battery cells.
Figure 2 depicts a simplified schematic circuit diagram of an active pre-charge circuit which uses a local fast control loop to charge a DC link capacitor from one or more battery cells.
Figure 3 depicts a simplified schematic circuit diagram of a predictive active pre-charge circuit which uses a slow control loop to charge a DC link capacitor from one or more battery cells in accordance with selected embodiments of the present disclosure.
Figure 4 is a charge timing diagram illustrating predictive software controlled active pre-charging of a DC link capacitor from one or more battery cells in accordance with selected embodiments of the present disclosure.
Figure 5 depicts an example logic flow diagram illustrating the operation of a software-controlled predictive pre-charging controller for actively pre-charging a DC link capacitor from one or more battery cells in accordance with selected embodiments of the present disclosure.

### DETAILED DESCRIPTION

A predictive active pre-charge system, apparatus, and method of operation are described for controlling the active pre-charging of an electrical circuit element (e.g., a DC link capacitor in a power inverter module) from a battery power supply with a software-based mechanism which uses low-frequency measurements of voltages at the battery power supply and electrical circuit element to periodically determine a buck converter power switch duty cycle that is applied over a plurality of defined charging intervals to actively pre-charge the electrical circuit element to the battery power supply voltage level. In selected embodiments, the predictive active pre-charge system may be implemented with a software-based predictive pre-charge controller that is configured to generate pulse width modulate (PWM) power switching signals with controlled duty cycles that vary over the course of a plurality of defined charging intervals. In particular, the PWM power switching signals are supplied to one or more buck converter power switches which are connected and configured to pre-charge an electrical circuit element from a battery power supply. To control the duty cycles of the PWM power switching signals over time, the predictive pre-charge controller leverages existing high voltage measurements of the voltages at the battery power supply and electrical circuit element that are collected as part of a slow control loop. Based on the difference between the measured voltages at the battery power supply and electrical circuit element, the predictive pre-charge controller periodically computes the duty cycles that are applied over a plurality of defined charging intervals to actively pre-charge the electrical circuit element to the battery power supply voltage level. By connecting the software-based predictive pre-charge controller in a slow control loop to leverage existing high voltage measurements, there is no requirement for special circuitry to make fast analog measurements. Another advantage of using the software-based predictive pre-charge controller is there is no need to have an SMPS control circuit and high-voltage isolated power supply.

In this disclosure, an improved pre-charging circuit system design, structure, and method of operation are disclosed to address various problems in the art where various limitations and disadvantages of conventional solutions and technologies will become apparent to one of skill in the art after reviewing the remainder of the present application with reference to the drawings and detailed description provided herein. Various illustrative embodiments of the present invention will now be described in detail with reference to the accompanying figures. While various details are set forth in the following description, it will be appreciated that the present invention may be practiced without these specific details, and that numerous implementation-specific decisions may be made to the invention described herein to achieve the device designer's specific goals, such as compliance with process technology or design-related constraints, which will vary from one implementation to another. While such a development effort might be complex and time-consuming, it would nevertheless be a routine undertaking for those of ordinary skill in the art having the benefit of this disclosure. For example, selected aspects are depicted with reference to simplified schematic circuit and block diagram drawings without including every device feature or geometry in order to avoid limiting or obscuring the present invention. Such descriptions and representations are used by those skilled in the art to describe and convey the substance of their work to others skilled in the art. It is also noted that, throughout this detailed description, certain elements in the figures are illustrated for simplicity and clarity and have not necessarily been drawn to scale. Further, reference numerals have been repeated among the drawings to represent corresponding or analogous elements.

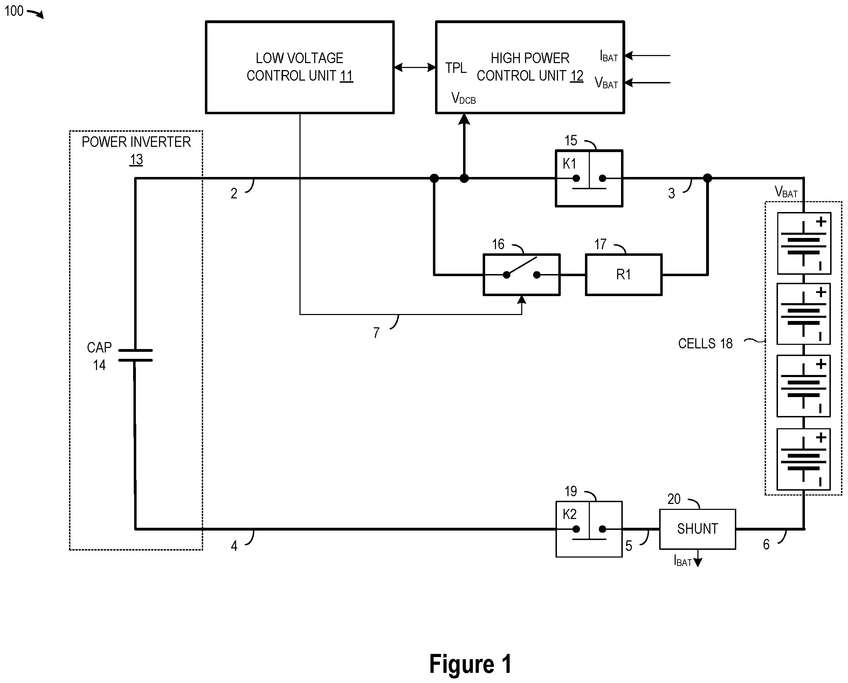

For a contextual understanding of the present disclosure, reference is now made to Figure 1 which depicts a simplified schematic circuit diagram of a passive pre-charge system 100 in which one or more battery cells 18 are used to charge a DC link capacitor 14 in a power inverter 13. In an example electric vehicle application, it will be appreciated that the DC link capacitor 14 will have a very large capacitance value that is needed to drive an electrical motor. In addition, the one or more battery cells 18 will also be sized to generate a very large voltage (e.g., 400 or 800 volts) that are required for operation of the electrical vehicle. However, at engine vehicle startup, the DC link capacitor 14 will be "empty" with zero volts, and any direct application of the large battery voltage would damage circuit components in the passive pre-charge system 1, the DC link capacitor 14 or other circuits in the power inverter 13, so the passive pre-charge system 100 operates to pre-charge or start charging of the DC link capacitor in a gradual fashion.

To enable gradual pre-charging, the passive pre-charge system 100 includes a first contactor switch K1 15 which is connected over a first conductive rail line 2 to a first terminal of the DC link capacitor 14 and which is connected over a second conductive rail line 3 to a first terminal of the one or more battery cells 18. In addition, the passive pre-charge system 100 includes a second contactor switch K2 19 which is connected over a third conductive rail line 4 to a second terminal of the DC link capacitor 14 and which is connected over a fourth conductive rail line 5, a low resistance or shunt resistor 20, and fifth conductive rail line 6 to a second terminal of the one or more battery cells 18. If the first and second contactor switches 15, 19 are closed, the DC voltage of the battery cells 18 may be connected to the power inverter 13 over the conductive rail lines 2-6 provided. If at least one of the two contactor switches 15, 19 are opened again, then the DC voltage of the battery cells 18 is disconnected from the power inverter 13. As disclosed, the power inverter 13 includes a DC link capacitor 14 which may be connected with additional circuitry (not shown) that generates and/or outputs an AC voltage from the DC voltage of the battery cells 18, such as an electric drive motor.

The passive pre-charge system 100 also includes a passive pre-charge path which includes a pre-charge switch 16 and resistor R1 17 connected in series between the first and second conductive rail lines 2, 3, thereby providing a conductive bypass charging path around the first contactor switch K1 15. To control the switch timing of the pre-charge switch 16, the passive pre-charge system 100 includes a low voltage control unit 11 (a.k.a. battery management unit) and high-power control unit 12 (a.k.a., battery junction box). In particular, the high-power control unit 12 is connected to measure the battery current I_{BAT} from the shunt resistor 20 using any suitable current measurement circuit. For example, a measurement circuit may compute the battery current I_{BAT} by measuring the voltage drop across the low resistance shunt resistor 20. In addition, the high-power control unit 12 is connected to measure the battery voltage V_{BAT} from the battery cells 18 using any suitable voltage measurement circuit. For example, a spectroscopy unit may be configured to perform electrochemical impedance spectroscopy based on the battery current I_{BAT}. The spectroscopy unit may further be configured to measure the capacitor voltage V_{DCB}.

Under control of the high-power control unit 12, the first contactor switch K1 15 is turned OFF or opened to prevent current flow across the first and second conductive rail lines 2, 3, such as by supplying gate switching control signals (not shown) to the first contactor switch K1 15. In addition, the low voltage control unit 11 may be connected and configured to control the pre-charge switch 16, which may be a contactor switch or relay, such as by supplying the gate switching control signal 7 to turn ON or close the pre-charge switch 16 to allow current flow. When the pre-charge switch 16 is closed or turned ON, the resistor R1 17 is a bulky resistor with a resistance that will allow some limited current to flow through the pre-charge switch 16 and the first conductive rail line 2 to charge the DC link capacitor 14. Once the voltage V_{DCB} at the first conductive rail 2 reaches a threshold voltage point (e.g., V_{DCB} ≥ 98% of V_{BAT}), then the first contactor switch K1 15 is turned ON or closed to connect the battery cells 18 to the power inverter 13.

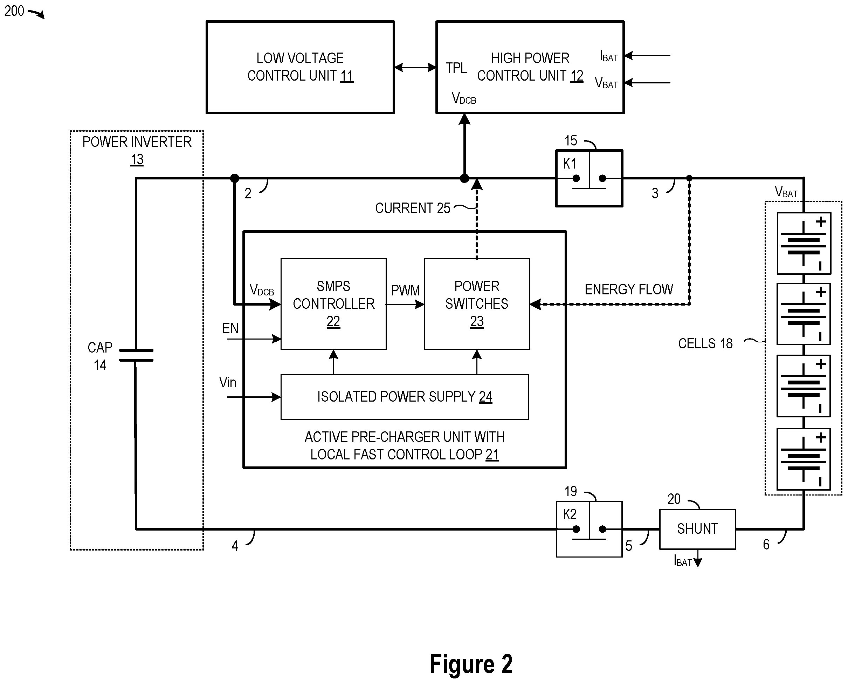

While the passive pre-charge system 100 helps prevent damage to the contactor switches 15, 19 (K1, K2), the pre-charge switch 16 and resistor R1 17 are bulky and expensive components which add cost and complexity. To reduce system costs, active pre-charging solutions have been proposed which eliminate the bulky and expensive components, but at the cost of increasing system complexity. For example, reference is now made to Figure 2 which depicts a simplified schematic circuit diagram of an active pre-charge system 200 which uses a local fast control loop to charge the DC link capacitor 14 in the power inverter 13 from one or more battery cells 18. As will be appreciated, the active pre-charge system 200 includes some of the same elements depicted in the passive pre-charge system 100 depicted in Figure 1, such as the power inverter 13 and DC link capacitor 14 which are connected over the conductive rail lines 2-6, contactor switches 15, 19 (K1, K2), and shunt resistor 20 to the battery cells 18. However, the depicted active pre-charge system 200 also includes an active pre-charger unit with local fast control loop 21 connected as shown between the first and second conductive rail lines 2, 3 to actively pre-charge the voltage V_{DCB} at the first conductive rail 2. In the depicted embodiment, the active pre-charger unit with local fast control loop 21 includes a switched mode power supply (SMPS) controller hardware unit 22 and one or more power switches and inductive elements 23 which are connected as shown to provide a conductive bypass charging path around the first contactor switch K1 15 to selectively transfer energy from the battery cells 18 to the DC link capacitor 14 in the power inverter 13 by generating pre-charging current 25 that is supplied to the first conductive rail 2. As will be appreciated, the power switches 23 may be part of a step-down buck converter, though any suitable power switching circuitry may be used to transfer the energy from the battery cells 18 to the first conductive rail 2. To control the energy transfer function of the one or more power switches 23, the SMPS controller hardware unit 22 is connected to receive an active pre-charging enable signal (EN) which may be generated by the low voltage control unit 11, or high-power control unit 12. When enabled, the SMPS controller hardware unit 22 is configured to generate a pulse width modulated (PWM) switching signal that is provided to the one or more power switches 23 in response to a feedback input signal of the voltage V_{DCB} from the first conductive rail 2. When the power switches 23 are part of a buck converter, the SMPS controller hardware unit 22 controls the duty cycle of the PWM switching signal provided to the power switches 23. In this configuration, the SMPS controller hardware unit 22 may generate the PWM switching signal which has a switching frequency of 100kHz-1MHz, thereby enabling a local fast control loop adjustments of the pre-charging voltage V_{DCB} at or below T=10 µs. In this way, the SMPS controller hardware unit 22 can be configured to follow a pre-determined pre-charge trajectory path for converting the energy flow from the battery cells 18 to the first conductive rail 2. However, since the SMPS controller hardware unit 22 and power switch(es) 23 are in the high voltage environment, the active pre-charger unit 21 also requires an isolated power supply 24 that is connected to power the SMPS controller hardware unit 22 and power switch(es) 23.

To implement active pre-charging, the low voltage control unit 11 or high-power control unit 12 is connected to turn OFF or open the contactor switch K1 15 to prevent current flow across the first and second conductive rail lines 2, 3, such as by supplying gate switching control signals (not shown) to the first contactor switch K1 15. In response to the pre-charging enable signal EN, the SMPS controller hardware unit 22 generates the PWM switching signal which controls the power switch(es) 23 to selectively generate the pre-charging current 25 which generates the voltage V_{DCB} at the first conductive rail 2 until a threshold voltage point is reached (e.g., V_{DCB} ≥ .98 V_{BAT}), at which point the low voltage control unit 11 or high-power control unit 12 turns ON or closes the first contactor switch K1 15 to connect the battery cells 18 to the power inverter 13. In this configuration, the active pre-charge system 200 helps prevent damage to the contactor switches 15, 19 (K1, K2) by providing a fast voltage and current feedback control mechanism. However, the pre-charge system 200 has increased complexity and costs by virtue of the SMPS controller hardware unit 22 and isolated power supply 24.

As seen from the foregoing, there are conflicts and tradeoffs between providing battery power supply pre-charging that has good performance for protecting electrical circuit components during startup with reduced cost and complexity. To address the foregoing deficiencies and others known to those skilled in the art, there is disclosed herein a predictive active pre-charge system, apparatus, and method of operation for controlling the active pre-charging of the DC link capacitor from the battery power supply with a software-based mechanism which uses low-frequency measurements of voltages at the battery power supply and DC link capacitor to periodically determine a buck converter power switch duty cycle that is applied over a plurality of defined charging intervals to actively pre-charge the DC link capacitor to the battery power supply voltage level.

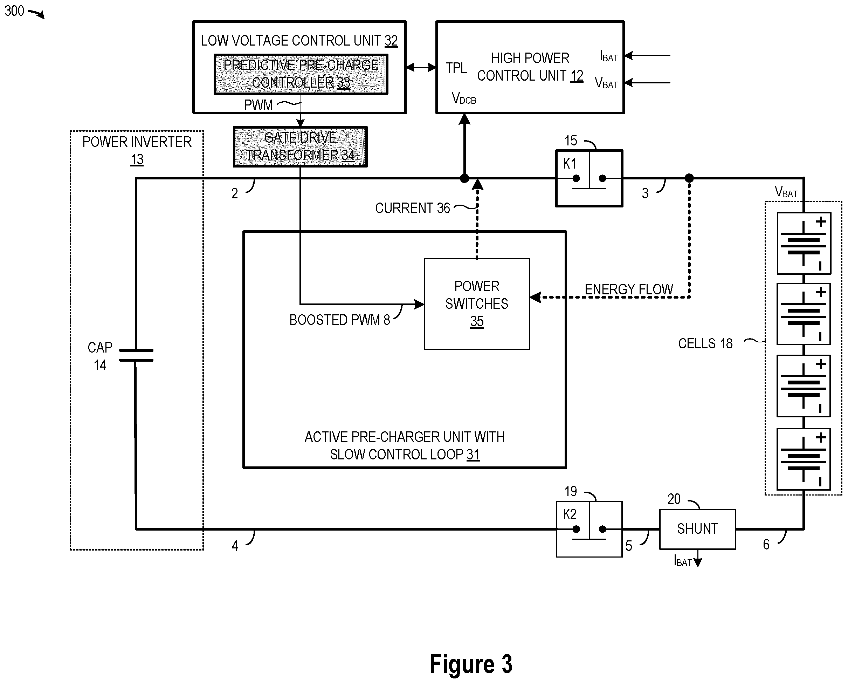

To provide an improved understanding of selected embodiments of the present disclosure, reference is now made to Figure 3 which depicts a simplified schematic circuit diagram of a predictive active pre-charge system 300 which uses a slow control loop to charge the DC link capacitor 14 in the power inverter 13 from one or more battery cells 18. As will be appreciated, the predictive active pre-charge system 300 includes some of the same elements depicted in the active pre-charge system 200 depicted in Figure 2, such as the power inverter 13 and DC link capacitor 14 which are connected over the conductive rail lines 2-6, contactor switches 15, 19 (K1, K2), and shunt resistor 20 to the battery cells 18. However, instead of using an SMPS controller and isolated power supply to generate PWM switching signals, the depicted predictive active pre-charge system 300 includes an active pre-charger unit with slow control loop 31 that is connected as shown between the first and second conductive rail lines 2, 3 to actively pre-charge the voltage V_{DCB} at the first conductive rail 2. In selected embodiments, the predictive pre-charge software controller 22 may be installed and executed at the low voltage control unit 32 to generate the PWM switching signals based on measurements of the capacitor voltage V_{DCB} and battery voltage V_{BAT} that are collected by the high-power control unit 12. For example, the power control unit 12 may include a spectroscopy unit that is connected and configured to measure the battery current I_{BAT}. In addition, the spectroscopy unit may measure the battery voltage V_{BAT} from the battery cells 18, such as by performing electrochemical impedance spectroscopy based on the battery current I_{BAT}. The spectroscopy unit may further be configured to measure the capacitor voltage V_{DCB} at the first conductive rail 2.

As disclosed herein, the high-power control circuit 12 measures the voltages capacitor V_{DCB}, V_{BAT} and transfers the voltage measurement values to the low voltage control unit over a message communication link, such as an electrical transport protocol link (TPL) or computer area network (CAN) link. However, the voltage values are measured at a relatively slow rate (e.g., every 1ms). As a result, the active pre-charger unit, high-power control circuit 12, and low voltage control unit 32 are connected in a slow control loop wherein the predictive pre-charge software controller 33 at the low voltage control unit 32 is configured to generate the PWM switching signals in predetermined control periods or intervals such that a computed duty cycle from the pre-charge software controller 33 is fixed over the duration of each predetermined control period or interval. In such a slow control loop, the duty cycle for the PWM switching signals is changed from interval to interval based on the measurements of the capacitor voltage V_{DCB} and battery voltage V_{BAT} collected by the high-power control unit 12. In this way, the predictive pre-charge software controller 33 at the low voltage control unit 32 is connected and configured to generate the PWM switching signals. By including a gate drive transformer unit, or other suitable isolated gate drive circuit 34 (such as a capacitive, RF isolated gate driver, optical drive circuit or similar gate drive circuit), the PWM switching signals are adjusted into boosted PWM switching signals that meet the required voltage levels for the power switches and inductive elements 35, thereby eliminating the requirement for any isolated power supply. In this way, the predictive pre-charge software controller 33 may be configured to use the drive transformer unit 34 to control the power switch(es) 35 to selectively generate the pre-charging current 36 which generates the voltage V_{DCB} at the first conductive rail 2 until a threshold voltage point is reached (e.g., V_{DCB} ≥ .98 V_{BAT}), at which point the high-power control unit 12 turns ON or closes the first contactor switch K1 15 to connect the battery cells 18 to the power inverter 13. In this configuration, the predictive active pre-charge system 300 helps prevent damage to the contactor switches 15, 19 (K1, K2) by providing a slow voltage and current feedback control mechanism.

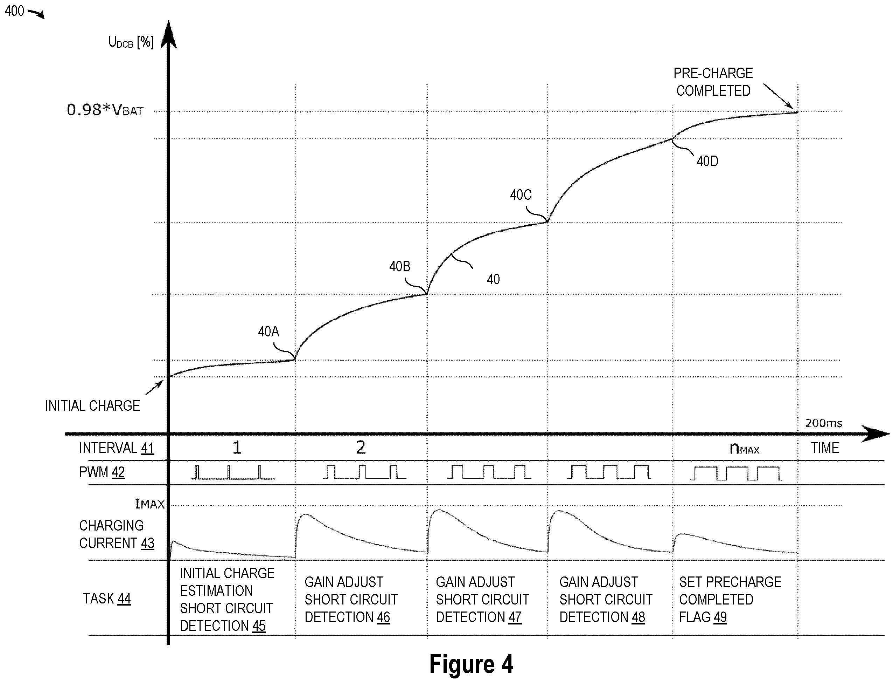

To provide an improved understanding of selected embodiments of the present disclosure, reference is now made to Figure 4 which depicts a charge timing diagram 400 illustrating the operation of a software-controlled predictive active pre-charging of a DC link capacitor from one or more battery cells. As depicted with charge signal 40, the DC link capacitor starts at a very low initial charge, and is then pre-charged up to a target charge level where the pre-charge is complete. Due to the limited frequency of the slow control loop to update the PWM duty cycles, it is not feasible to continuously adjust the duty cycles of the PWM switching signal so that the charge smoothly increases from the initial charge level to the target charge level (e.g., the charge corresponding to .98V_{BAT}). Instead, the DC link capacitor is charged over a defined number of nₘₐₓ charging intervals 41, where the PWM switching signal in each charging interval has a defined PWM duty cycle 42. In selected embodiments, the PWM duty cycle in each interval remains constant during the interval. In other embodiments, the PWM duty cycle in each interval may be extrapolated by a curve function over the interval to achieve a smoother charging current. As disclosed herein, the number of nₘₐₓ charging intervals 41 is based on how many defined charging intervals will fit within the required charging time for a particular application to charge the DC link capacitor with the battery cells. For example, if an electric vehicle requires that the engine starter be charged up 200 milliseconds, and each charging is 1 millisecond in duration, then the number of charging intervals is nₘₐₓ = 200.

For example, the predictive active pre-charge circuit may compute a relatively low PWM duty cycle for the first interval (Interval 1) which is applied to the power switches to generate the charging current 43 for charging the DC link capacitor from the initial charge to a first initial charge level 40A. At each subsequent interval (e.g., Interval 2), the predictive active pre-charge circuit may re-compute new PWM duty cycles which is applied to the power switches to generate the charging current 43 for charging the DC link capacitor to a boosted charge level (e.g., 40B), and so on for the remaining intervals to sequentially boost the DC link capacitor charge to boosted charge levels (e.g., 40C, 40D), until reaching the target charge level (e.g., the charge corresponding to .98V_{BAT}).

In selected embodiments where constant PWM duty cycles are used for each interval, the predictive active pre-charge system may compute the PWM duty cycle for each interval by first measuring the initial capacitor voltage V_{DCB} and battery voltage V_{BAT}. As disclosed herein, the voltage measurement may be made by the high-power control unit 12. Based on the initial voltage measurements, the predictive active pre-charge system computes the voltage difference between the initial capacitor voltage V_{DCB} and battery voltage V_{BAT}, and then divides the voltage difference value by the defined number of nₘₐₓ charging intervals to obtain the required voltage increase step for at least the first interval. The predictive active pre-charge system then computes the PWM duty cycle for the first interval which is used to charge the DC link capacitor from the initial charge to a first initial charge level 40A. In case there is a short on the DC capacitor link, the PWM duty cycle for the first interval starts with a low duty-cycle to not to exceed maximum current (I_{MAX}) so as to prevent damage from a large current pulse during the first pre-charging interval. At each succeeding interval, the predictive active pre-charge system may re-compute the required voltage increase step by measuring the remaining voltage difference between the current capacitor voltage V_{DCB} and the battery voltage V_{BAT}, and then dividing the remaining voltage difference by the remaining number of nₘₐₓ charging intervals to compute the PWM duty cycle for the next charging interval which generates a charging current that is limited to a maximum current (I_{MAX}) so as to prevent circuit damage. Thus, after every charging interval, the PWM duty cycle may be recalculated based on the amount of energy charged during the previous charging interval.

As illustrated in Figure 4, the operation of the predictive active pre-charge system may be divided into a number of tasks 44 that are performed over the defined number of nₘₐₓ charging intervals. In a first task 45, the predictive active pre-charge system computes or estimates an initial charge level of the DC link capacitor by measuring the voltage difference between the initial capacitor voltage V_{DCB} and the battery voltage V_{BAT}, and then uses the voltage difference to compute an initial PWM duty cycle 42 for the first charging interval which generates an initial charging current 43 that can be used to detect a short circuit at the DC link capacitor. In a second task 46, the predictive active pre-charge system computes or estimates the remaining DC link capacitor charge required to fully charge the DC link capacitor by subtracting the current capacitor voltage V_{DCB} from the battery voltage V_{BAT}, and then computes a second, higher PWM duty cycle 42 which generates a gain adjustment charging current 43 for the second charging interval which can also be used to detect a short circuit at the DC link capacitor. In a third task 47, the predictive active pre-charge system computes or estimates the remaining DC link capacitor charge required to fully charge the DC link capacitor, and then computes a third, higher PWM duty cycle 42 which generates a gain adjustment charging current 43 for the third charging interval which can also be used to detect a short circuit at the DC link capacitor. And this process is repeated for the remaining tasks 47, 48 until the final task 49 where the predictive active pre-charge system detects that pre-charging of the DC link capacitor will be completed in the final interval 49. At this point, the predictive active pre-charge system computes a final, higher PWM duty cycle 42 which generates a gain adjustment charging current 43 for the final charging interval, at which point a "pre-charge complete" flag may be set.

As disclosed herein, the predictive active pre-charge system can detect short circuits at the DC link capacitor by tracking the capacitor voltage V_{DCB} at each charging interval. If the predictive active pre-charge system detects there is no change in the capacitor voltage V_{DCB}, after the charging interval is executed, then this indicates there is a short circuit. However, if the predictive active pre-charge system detects there is a boost in the capacitor voltage V_{DCB}, then this indicates there is no short circuit. If selected embodiments, the predictive active pre-charge system can evaluate whether there is a change in the capacitor voltage V_{DCB} at the first charging interval, at every charging interval or on any predetermined basis.

As indicated above, the PWM duty cycle can be fixed over the course of each charging interval. However, in other embodiments, the PWM duty cycle can at each charging interval can be interpolated or modulated to provide a PWM duty cycles that increase in a linear or predetermined fashion over the course of each charging interval so that the duty cycle is smaller at the beginning and the bigger at the at the end. This approach will allow the charging current to hold at a steady level with less drop-off over the charging interval, resulting in faster charging of the DC link capacitor.

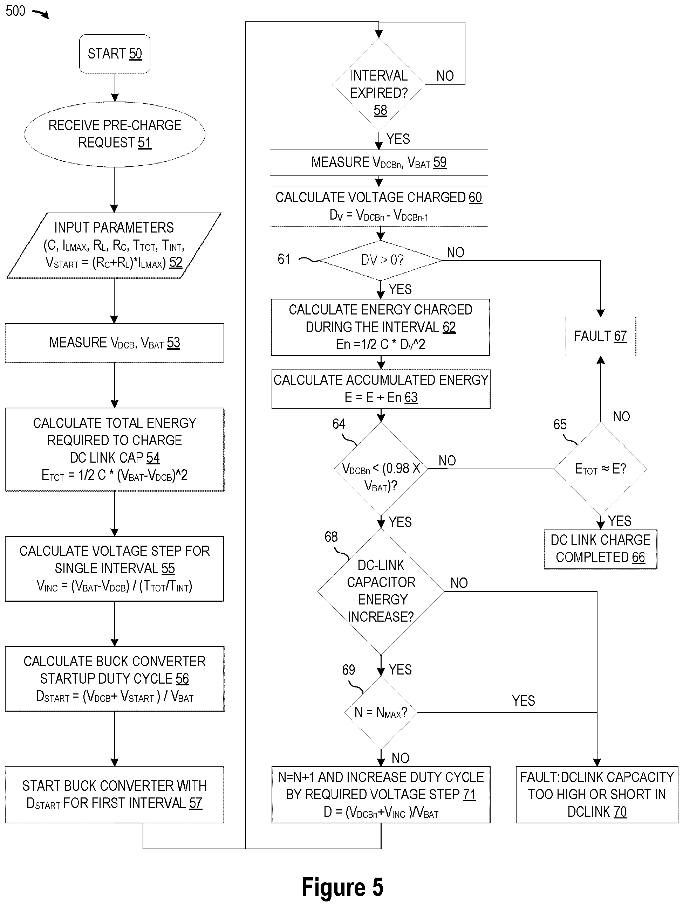

For an improved understanding of selected embodiments of the present disclosure, reference is now made to Figure 5 which depicts an example logic flow diagram 500 illustrating the operation of a software-controlled predictive pre-charging controller for actively pre-charging a DC link capacitor from one or more battery cells. As disclosed herein, the recited functionality of steps 50-71 may be performed under control of a software-based predictive pre-charge controller which is installed at a low voltage battery management unit (BMU) and which is connected and configured through a high-power battery junction box (BJB) control unit to periodically measure the battery voltage V_{BAT}, battery current I_{BAT}, and capacitor voltage V_{DCB}.

Once the method starts (step 50), a pre-charge request is received at step 51. For example, the ignition start sequence at an electric vehicle may issue a pre-charge request which is received by the predictive pre-charge controller.

At 52, a plurality of input parameter values are defined for use in controlling the active pre-charging of a DC link capacitor from a battery power supply. For example, the predictive pre-charge controller may define and/or retrieve predetermined input parameters from memory relating to the circuit pre-charging operation. Example input parameters include, but are not limited to the DC-link capacitor value (C [uF]), the DC-link capacitor series resistance value (Rc [Ω]), the maximum coil current value (I_{LMAX} [A]), the DC coil resistance value (R_{L} [Ω]), the battery voltage value (V_{BAT} [V]), the DC-link capacitor voltage value (V_{DCB} [V]), the first interval voltage step value (V_{START} [V]), the incremental voltage step value (V_{INC} [V]), the first interval duty cycle (D_{START} [%]), the total pre-charge time duration (t_{TOT} [ms]), the time duration of a single charging interval (t_{INT} [ms]), the total energy required to charge the DC-link capacitor (E_{TOT} [J]), the energy charged in a single charging interval (Eₙ [J]), the total energy accumulated at the DC-link capacitor (E [J]), and the voltage charged during a one charging interval (dv [V]). In the computational operation of the predictive pre-charge controller, one or more of the input parameters may be used to calculate other parameter values. For example, the first interval voltage step value may be computed as V_{START} = (Rc + R_{L})* I_{LMAX}.

At steps 53-56, a first duty cycle for a first charging interval is calculated, starting by measuring the initial DC-link capacitor voltage value (V_{DCB}) and battery voltage value (V_{BAT}) at step 53. For example, the high-power BJB control unit may use a spectroscopy unit to measure the initial V_{BAT} and V_{DCB} voltages from, respectively, the battery cells and the DC-link capacitor.

At step 54, the total energy E_{TOT} required to charge the DC-link capacitor is calculated. For example, the software-based predictive pre-charge controller that is installed at the low voltage BMU may be connected to receive the measured V_{BAT} and V_{DCB} voltage values from the high-power BJB control unit, and may be configured to compute E_{TOT} = 1/2C * (V_{BAT} - V_{DCB})². The computed E_{TOT} value is the energy required to charge the DC-link capacitor from the initial charge (based on the initial DC link capacitor voltage) to the eventual charge when the DC link capacitor voltage is substantially equal to the battery pack voltage (e.g., V_{DCB} = .98 V_{BAT}).

At step 55, the incremental step voltage V_{INC} for each charging interval is calculated by dividing the voltage difference (V_{BAT} - V_{DCB}) by the number of intervals (which may be computed by dividing the total pre-charge time t_{TOT} by the interval time t_{INT}) to define the intended voltage increase step for each interval. For example, the software-based predictive pre-charge controller may be configured to compute the incremental step voltage V_{INC} = (V_{BAT} - V_{DCB})/( t_{TOT}/t_{INT}).

At step 56, the first duty cycle for a first charging interval D_{START} is calculated. For example, if a buck converter has a duty cycle D = Vₒᵤₜ/Vᵢₙ, where Vₒᵤₜ is the initial capacitor voltage plus the voltage step that will occur when the maximum current flows through all series resistance, then the software-based predictive pre-charge controller may be configured to compute the buck converter startup duty cycle for the first charging interval D_{START} = (V_{DCB}+ V_{START} )/V_{BAT}.

At step 57, the buck converter is started with the first duty cycle D_{START} for the first charging interval. For example, the software-based predictive pre-charge controller may be configured to generate PWM switching signals for the first charging interval having the first duty cycle D_{START} which are applied to a gate drive transformer unit which generates boosted PWM switching signals that meet the required voltage levels for the power switches in the buck converter to generate the pre-charging current for charging the DC-link capacitor during the first charting interval.

At step 58, the current charging interval is monitored to determine when it expires. For example, the software-based predictive pre-charge controller may start a timer configured with the charging interval timer value t_{INT} to run. If the charging interval has not expired (negative outcome to detection step 58), the process continues waiting.

When the charging interval has ended (affirmative outcome to detection step 58), the current DC-link capacitor voltage V_{DCBn} and the battery voltage V_{BAT} are measured again to check whether the energy has increased by detecting whether the DC-link capacitor voltage has increased. This starts at step 59 by measuring the current DC-link capacitor voltage value V_{DCBn} and battery voltage value V_{BAT}, such as by using the high-power BJB control unit to measure the V_{BAT} and V_{DCBn} voltages from, respectively, the battery cells and the DC-link capacitor.

At step 60, the voltage charge value Dv is calculated to determine if the current DC-link capacitor voltage value V_{DCBn} has changed from the previously measured DC-link capacitor voltage value V_{DCBn-1}. For example, the software-based predictive pre-charge controller may be configured to compute Dv = V_{DCBn} - V_{DCBn}

At step 61, the calculated voltage charge value Dv is evaluated to see if the DC-link capacitor voltage was increased by the charging interval. For example, the software-based predictive pre-charge controller may be configured to detect if voltage charge value Dv>0. If there was no increase in the voltage charge value Dv for a given charging interval (negative outcome to detection step 61), the software-based predictive pre-charge controller indicates there is fault at step 67 and the process ends.

However, when there is an increase in the voltage charge value Dv for a given charging interval (affirmative outcome to detection step 61), then the cumulative voltage charged to the DC-link capacitor is compared to a predetermined battery voltage threshold value at steps 62-64. Beginning with step 62, the amount of energy charged during the previous charging interval En is calculated. For example, the software-based predictive pre-charge controller may be configured to compute the energy En = 1/2C * (Dv)².

At step 63, the accumulated energy charged to the DC-link capacitor E is calculated. For example, the software-based predictive pre-charge controller may be configured to compute an updated energy value En = E + En.

At step 64, the current DC-link capacitor voltage V_{DCBn} is evaluated to determine if it has reached a predetermined battery voltage threshold value. For example, the software-based predictive pre-charge controller compares the current DC-link capacitor voltage V_{DCBn} to a predetermined battery voltage threshold value (e.g., V_{DCBn} < (.98 V_{BAT})).

If the current DC-link capacitor voltage V_{DCBn} has reached the predetermined battery voltage threshold value (negative outcome to detection step 64), then the software-based predictive pre-charge controller may be configured to compare energy accumulated at the DC-link capacitor E to the total energy required to charge the DC-link capacitor E_{TOT} at step 65.

If the accumulated energy E at the DC-link capacitor has not reached the total energy required to charge the DC-link capacitor E_{TOT} (negative outcome to detection step 65), the software-based predictive pre-charge controller indicates there is fault at step 67 and the process ends. However, if the accumulated energy E has reached the total energy E_{TOT} (affirmative outcome to detection step 65), then the software-based predictive pre-charge controller indicates that the charging of the DC-link capacitor is complete at step 66 and the pre-charging process ends, allowing the contactors between the power inverter and battery supply to be closed.

Referring back to detection step 64, if the current DC-link capacitor voltage V_{DCBn} has not reached the predetermined battery voltage threshold value (affirmative outcome to detection step 64), then a fault detection step is performed to detect there was an increase in the DC-link capacitor energy from the last charging interval at step 68. For example, the software-based predictive pre-charge controller may be configured to compare the energy accumulated at the current interval Eₙ to the energy accumulated at the previous interval Eₙ₋₁.

If there was no increase in the DC-link capacitor energy from the last charging interval (negative outcome to detection step 68), the process ends after the software-based predictive pre-charge controller indicates there is fault at step 70. At this point in the program flow, the fault could be caused by the DC-link capacitance value being too high or by a short in the DC-link capacitor circuit.

However, if there was an increase in the DC-link capacitor energy from the last charging interval (affirmative outcome to detection step 68), then the software-based predictive pre-charge controller determines if the maximum number of charging intervals n_{MAX} has been reached at step 69.

If the maximum number of charging intervals has been reached (affirmative outcome to detection step 69), the process ends after the software-based predictive pre-charge controller indicates there is fault at step 70. At this point in the program flow, the fault could be caused by the DC-link capacitance value being too high or by a short in the DC-link capacitor circuit.

However, if the maximum number of charging intervals has not been reached (negative outcome to detection step 69), then the next duty cycle is calculated for the next charging interval by repeating the steps 58-69 by increasing the target DC-link capacitor voltage by the incremental step voltage V_{INC}. For example, the software-based predictive pre-charge controller may be configured to increment the charging interval count n=n+1 and to compute a fixed duty cycle D = (V_{DCBn}+V_{INC})/V_{BAT} for use at the next charging interval. As an alternative to computing a fixed duty cycle D, the software-based predictive pre-charge controller may be configured to compute a varying duty cycle that based on a pre-determined shape which causes the buck converter to generate a more constant pre-charging current for charging the DC-link capacitor. In computing the varying duty cycle, the control is open loop for each charging interval, i.e., the duty cycle is predetermined and there are no V_{DCB} measurements within a charging interval to verify whether things are progressing in the right direction. In addition, it will be appreciated that the continuous I_{BAT} measurement provided by the high-power control unit may be used to protect the whole circuit, including the pre-charge circuits, from overcurrent. In case overcurrent is detected by high-power control unit, the contactor K2 may be commanded to be open to protect the circuit.

By iteratively repeating the steps 58-69, the software-based predictive pre-charge controller effectively pre-charges the DC-link capacitor until the overall accumulated energy E more or less equals the total energy E_{TOT} required to charge the DC-link capacitor. If the DC-link capacitor voltage reaches predetermined battery voltage threshold value, but the overall accumulated energy E does not equal the total energy E_{TOT}, a fault is given.

As described hereinabove, the present disclosure provides a software-based predictive active pre-charging system which leverages existing slow voltage measurement circuitry, thereby replacing a local pre-charge control circuit which uses fast analog measurements for active DC-link pre-charging. In addition to leveraging existing slow voltage measurement circuitry already available in high voltage power control systems, the disclosed software-based predictive active pre-charging system and methodology eliminates the requirement of including a switch mode power supply (SMPS) control integrated circuit and high voltage isolated power supply for the SMPS control integrated circuit. As a result, the disclosed software-based predictive active pre-charging system and methodology reduce the cost and complexity of active pre-charging solutions.

A device and method for actively pre-charging an inverter capacitor includes a switched bypass pre-charging path having one or more power switches for selectively connecting and disconnecting the battery and the inverter capacitor in response to one or more first switching control signals having a configurable duty cycle, where one or more processor units are configured with a predictive active pre-charging module to control active pre-charging of the inverter capacitor from the battery by using low-frequency measurements of a battery voltage and an inverter capacitor voltage to periodically determine the configurable duty cycle for the one or more first switching control signals that is applied over a plurality of specified charging intervals to actively pre-charge the inverter capacitor to the battery voltage.

By now, it should be appreciated that there has been provided a device, system, apparatus, circuit, and associated method of operation for actively pre-charging an inverter from a battery. The disclosed device includes first and second battery terminals connected to the battery. In addition, the disclosed device includes first and second inverter terminals connected to an inverter having an inverter capacitor coupled between the first inverter terminal and the second inverter terminal. The disclosed device also includes a first contactor switch connected between the first battery terminal and the first inverter terminal for selectively connecting and disconnecting the battery and the inverter capacitor. In addition, the disclosed device includes a switched bypass pre-charging path connected in parallel with the first contactor switch between the first battery terminal and the first inverter terminal, where the switched bypass pre-charging path includes one or more power switches for selectively connecting and disconnecting the battery and the inverter capacitor in response to one or more first switching control signals having a configurable duty cycle. The disclosed device also includes one or more processor units configured with a predictive active pre-charging module to control active pre-charging of the inverter capacitor from the battery when the first contactor switch disconnects the battery from the inverter capacitor, where the predictive active pre-charging module includes program code that is executed by the one or more processor units to use low-frequency measurements of a battery voltage and an inverter capacitor voltage to periodically determine the configurable duty cycle for the one or more first switching control signals that is applied over a plurality of specified charging intervals to actively pre-charge the inverter capacitor to the battery voltage. In selected embodiments, the disclosed device may also include a second contactor switch connected between the second battery terminal and the second inverter terminal for selectively connecting and disconnecting the battery and the inverter capacitor. In selected embodiments, the disclosed device may also include a gate drive transformer unit connected to receive the one or more first switching control signals and configured to generate one or more boosted first switching control signals which are provided to control the one or more power switches. In selected embodiments, the disclosed device may also include a high-power control unit that is connected and configured to make low-frequency measurements of the battery voltage and the inverter capacitor voltage. In such embodiments, the high-power control unit may be connected and configured to convey to the predictive active pre-charging module a measured battery voltage value V_{BAT} and a measured capacitor voltage value V_{DCB} based on, respectively, the low-frequency measurements of the battery voltage and the inverter capacitor voltage. In selected embodiments, the predictive active pre-charging module may include program code that is executed by the one or more processor units to generate the one or more first switching control signals with configurable duty cycles that are fixed for each of the specified charging intervals. In other selected embodiments, the predictive active pre-charging module may include program code that is executed by the one or more processor units to generate the one or more first switching control signals for each of the specified charging intervals with configurable duty cycles that vary based on a pre-determined shape which causes the one or more power switches to generate a substantially constant pre-charging current for charging the inverter capacitor.

In another form, there has been provided a device, system, apparatus, circuit, and associated method for actively pre-charging an inverter from a battery. The disclosed method includes measuring a battery voltage value across first and second battery terminals of a battery, and also includes measuring an inverter capacitor voltage value across first and second inverter terminals of an inverter. In selected embodiments, a high-power control unit is connected and configured to make low-frequency measurements of the battery voltage value and the inverter capacitor voltage value. In selected embodiments, the battery voltage value and inverter capacitor voltage value are measured approximately once every millisecond. In addition, the disclosed method also includes disconnecting the first battery terminal from the first inverter terminal using a first contactor switch that is connected between the first battery terminal and the first inverter terminal while connecting the second battery terminal to the second inverter terminal using a second contactor switch that is connected between the second battery terminal and the second inverter terminal. The disclosed method also includes generating, over a plurality of discrete charging intervals, one or more first switching control signals having a configurable duty cycle that is adjusted over the plurality of discrete charging intervals under control of a predictive active pre-charging program code module which uses the battery voltage value and the inverter capacitor voltage value to periodically determine the configurable duty cycle for the one or more first switching control signals. In selected embodiments, each of the plurality of discrete charging intervals has a duration of approximately one millisecond. In selected embodiments, the one or more first switching control signals for each of the plurality of discrete charging intervals are generated with configurable duty cycles that are fixed for each of the plurality of discrete charging intervals. In other selected embodiments, the one or more first switching control signals for each of the plurality of discrete charging intervals are generated with configurable duty cycles that vary based on a pre-determined shape which causes the one or more power switches to generate a substantially constant pre-charging current for charging the inverter capacitor. In addition, the disclosed method includes selectively connecting the first battery terminal to the first inverter terminal over a switched bypass pre-charging path connected in parallel with the first contactor switch between the first battery terminal and the first inverter terminal by applying the one or more first switching control signals to one or more power switches in the switched bypass pre-charging path to actively pre-charge the inverter capacitor to a threshold voltage level. In selected embodiments, the disclosed method also includes generating, from the one or more first switching control signals, one or more boosted first switching control signals which are provided to control the one or more power switches in the switched bypass pre-charging path. In selected embodiments, the disclosed method also includes measuring, at each of the plurality of discrete charging intervals, the inverter capacitor voltage value across first and second inverter terminals of the inverter; and connecting the first battery terminal to the first inverter terminal and disconnecting the switched bypass pre-charging path when the inverter capacitor voltage value reaches the threshold voltage level.

In yet another form, there has been provided a device, system, apparatus, circuit, and associated method for actively pre-charging an inverter from a battery. The disclosed system includes a battery coupled between first and second battery terminals. In addition, the disclosed system includes an inverter comprising an inverter capacitor coupled between first and second inverter terminals. The disclosed system also includes a pre-charge circuit coupled between the first battery terminal and the first inverter terminal, where the pre-charge circuit includes one or more power switches connected to pre-charge the inverter capacitor in response to one or more pulse width modulated (PWM) switching control signals. In addition, the disclosed system includes one or more digital signal processor units which are coupled to pre-charge circuit and which are configured to execute predictive active pre-charging code to control pre-charging of the inverter capacitor by measuring, at each charging interval, a battery voltage value across the first and second battery terminals and an inverter capacitor voltage value across the first and second inverter terminals; generating, over a plurality of discrete charging intervals, the one or more PWM switching control signals having a configurable duty cycle that is adjusted over the plurality of discrete charging intervals in response to the battery voltage value and the inverter capacitor voltage value; and selectively connecting the first battery terminal to the first inverter terminal over a switched bypass pre-charging path connected between the first battery terminal and the first inverter terminal by applying the one or more PWM switching control signals to the one or more power switches in the pre-charge circuit to actively pre-charge the inverter capacitor to a threshold voltage level. In selected embodiments of the system, the one or more digital signal processor units may include a high-voltage control unit that is connected and configured to make low-frequency measurements of the battery voltage value and the inverter capacitor voltage value at each of the plurality of discrete charging intervals. In other selected embodiments of the system, the one or more digital signal processor units may also include a low voltage control unit that executes the predictive active pre-charging code. In other selected embodiments of the system, the system includes an isolated gate drive circuit connected and configured to generate, from the one or more PWM switching control signals, one or more boosted PWM switching control signals which are provided to the low voltage control unit to control the one or more power switches in the pre-charge circuit. In selected embodiments, the one or more PWM switching control signals for each of the plurality of discrete charging intervals are generated with configurable duty cycles that has a different fixed or variable value for each of the plurality of discrete charging intervals.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) which include program instructions in source code, object code, executable code or other formats for performing some of the steps. Any of the above may be embodied on a computer- readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Boundaries between the above-described operations are provided as examples. Multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A device for actively pre-charging an inverter from a battery, wherein the device comprises:
first and second battery terminals connected to the battery;
first and second inverter terminals connected to an inverter comprising an inverter capacitor coupled between the first inverter terminal and the second inverter terminal;
a first contactor switch connected between the first battery terminal and the first inverter terminal for selectively connecting and disconnecting the battery and the inverter capacitor;
a switched bypass pre-charging path connected in parallel with the first contactor switch between the first battery terminal and the first inverter terminal comprising one or more power switches for selectively connecting and disconnecting the battery and the inverter capacitor in response to one or more first switching control signals having a configurable duty cycle; and
one or more processor units configured with a predictive active pre-charging module to control active pre-charging of the inverter capacitor from the battery when the first contactor switch disconnects the battery from the inverter capacitor, where the predictive active pre-charging module comprises program code that is executed by the one or more processor units to use low-frequency measurements of a battery voltage and an inverter capacitor voltage to periodically determine the configurable duty cycle for the one or more first switching control signals that is applied over a plurality of specified charging intervals to actively pre-charge the inverter capacitor to the battery voltage.

2. The device of claim 1, further comprising a second contactor switch connected between the second battery terminal and the second inverter terminal for selectively connecting and disconnecting the battery and the inverter capacitor.

3. The device of claim 1 or 2, further comprising a gate drive transformer unit connected to receive the one or more first switching control signals and configured to generate one or more boosted first switching control signals which are provided to control the one or more power switches.

4. The device of any preceding claim, further comprising a high-power control unit that is connected and configured to make low-frequency measurements of the battery voltage and the inverter capacitor voltage.

5. The device of claim 4, where the high-power control unit is connected and configured to convey to the predictive active pre-charging module a measured battery voltage value V_{BAT} and a measured capacitor voltage value V_{DCB} based on, respectively, the low-frequency measurements of the battery voltage and the inverter capacitor voltage.

6. The device of any preceding claim, where the predictive active pre-charging module comprises program code that is executed by the one or more processor units to generate the one or more first switching control signals with configurable duty cycles that are fixed for each of the specified charging intervals.

7. The device of any preceding claim, where the predictive active pre-charging module comprises program code that is executed by the one or more processor units to generate the one or more first switching control signals for each of the specified charging intervals with configurable duty cycles that vary based on a pre-determined shape which causes the one or more power switches to generate a substantially constant pre-charging current for charging the inverter capacitor.

8. A method for actively pre-charging an inverter, comprising:
measuring a battery voltage value across first and second battery terminals of a battery;
measuring an inverter capacitor voltage value across first and second inverter terminals of an inverter;
disconnecting the first battery terminal from the first inverter terminal using a first contactor switch that is connected between the first battery terminal and the first inverter terminal while connecting the second battery terminal to the second inverter terminal using a second contactor switch that is connected between the second battery terminal and the second inverter terminal;
generating, over a plurality of discrete charging intervals, one or more first switching control signals having a configurable duty cycle that is adjusted over the plurality of discrete charging intervals under control of a predictive active pre-charging program code module which uses the battery voltage value and the inverter capacitor voltage value to periodically determine the configurable duty cycle for the one or more first switching control signals;
selectively connecting the first battery terminal to the first inverter terminal over a switched bypass pre-charging path connected in parallel with the first contactor switch between the first battery terminal and the first inverter terminal by applying the one or more first switching control signals to one or more power switches in the switched bypass pre-charging path to actively pre-charge the inverter capacitor to a threshold voltage level.

9. The method of claim 8, further comprising:
measuring, at each of the plurality of discrete charging intervals, the inverter capacitor voltage value across first and second inverter terminals of the inverter; and
connecting the first battery terminal to the first inverter terminal and disconnecting the switched bypass pre-charging path when the inverter capacitor voltage value reaches the threshold voltage level.

10. The method of claim 8 or 9, further comprising generating, from the one or more first switching control signals, one or more boosted first switching control signals which are provided to control the one or more power switches in the switched bypass pre-charging path.

11. The method of any of claims 8 to 10, where a high-power control unit is connected and configured to make low-frequency measurements of the battery voltage value and the inverter capacitor voltage value.

12. The method of any of claims 8 to 11, where the battery voltage value and inverter capacitor voltage value are measured approximately once every millisecond.

13. The method of any of claims 8 to 12, where each of the plurality of discrete charging intervals has a duration of approximately one millisecond.

14. The method of any of claims 8 to 13, where the one or more first switching control signals for each of the plurality of discrete charging intervals are generated with configurable duty cycles that are fixed for each of the plurality of discrete charging intervals.

15. The method of any of claims 8 to 14, where the one or more first switching control signals for each of the plurality of discrete charging intervals are generated with configurable duty cycles that vary based on a pre-determined shape which causes the one or more power switches to generate a substantially constant pre-charging current for charging the inverter capacitor.

## Amended claims

### Amended claims in accordance with Rule 137(2) EPC.

1. A device for actively pre-charging an inverter capacitor (14) from a battery (18), wherein the device comprises:
first and second battery terminals connectable to the battery;
first and second inverter terminals connectable to an inverter (13) comprising the inverter capacitor coupled between the first inverter terminal and the second inverter terminal;
a first contactor switch (15) connected between the first battery terminal and the first inverter terminal for selectively connecting and disconnecting the battery and the inverter capacitor;
a switched bypass pre-charging path connected in parallel with the first contactor switch between the first battery terminal and the first inverter terminal comprising one or more power switches (35) for selectively connecting and disconnecting the battery and the inverter capacitor in response to one or more first switching control signals having a configurable duty cycle; and
one or more processor units configured with a predictive active pre-charging module (33) to control active pre-charging of the inverter capacitor from the battery when the first contactor switch disconnects the battery from the inverter capacitor, where the predictive active pre-charging module comprises program code that is executed by the one or more processor units to use low-frequency measurements of a battery voltage (V_{BAT}) and an inverter capacitor voltage (V_{DCB}) to periodically determine the configurable duty cycle (42) for the one or more first switching control signals that is determined and applied over a plurality of respective specified charging intervals (41) to actively pre-charge the inverter capacitor to the battery voltage;
wherein the duty cycle for the one or more first switching control signals is configured by estimating a remaining charge required to fully charge the inverter capacitor based on a voltage difference between the measured battery voltage (V_{BAT}) and the inverter capacitor voltage (V_{DCB}).

2. The device of claim 1, further comprising a second contactor switch (19) connected between the second battery terminal and the second inverter terminal for selectively connecting and disconnecting the battery and the inverter capacitor.

3. The device of claim 1 or 2, further comprising a gate drive transformer unit (34) connected to receive the one or more first switching control signals and configured to generate one or more boosted first switching control signals which are provided to control the one or more power switches.

4. The device of any preceding claim, further comprising a high-power control unit (12) that is connected and configured to make low-frequency measurements of the battery voltage and the inverter capacitor voltage.

5. The device of claim 4, where the high-power control unit is connected and configured to convey to the predictive active pre-charging module a measured battery voltage value (V_{BAT}) and a measured capacitor voltage value (V_{DCB}) based on, respectively, the low-frequency measurements of the battery voltage and the inverter capacitor voltage.

6. The device of any preceding claim, where the predictive active pre-charging module comprises program code that is executed by the one or more processor units to generate the one or more first switching control signals with configurable duty cycles that are fixed for each of the specified charging intervals.

7. The device of any preceding claim, where the predictive active pre-charging module comprises program code that is executed by the one or more processor units to generate the one or more first switching control signals for each of the specified charging intervals with configurable duty cycles that vary based on a pre-determined shape which causes the one or more power switches to generate a substantially constant pre-charging current for charging the inverter capacitor.

8. A method for actively pre-charging an inverter capacitor (14), comprising:
measuring a battery voltage value across first and second battery terminals of a battery (18);
measuring an inverter capacitor voltage value across first and second inverter terminals of the inverter capacitor (14);
disconnecting the first battery terminal from the first inverter terminal using a first contactor switch (15) that is connected between the first battery terminal and the first inverter terminal while connecting the second battery terminal to the second inverter terminal using a second contactor switch (19) that is connected between the second battery terminal and the second inverter terminal;
generating, over a plurality of discrete charging intervals, one or more first switching control signals having a configurable duty cycle that is adjusted over the plurality of discrete charging intervals under control of a predictive active pre-charging program code module which uses the battery voltage value and the inverter capacitor voltage value to periodically determine the configurable duty cycle for the one or more first switching control signals; wherein the duty cycle is configured by estimating a remaining charge required to fully charge the inverter capacitor based on a voltage difference between the battery voltage value and the inverter capacitor voltage value; and
selectively connecting the first battery terminal to the first inverter terminal over a switched bypass pre-charging path connected in parallel with the first contactor switch between the first battery terminal and the first inverter terminal by applying the one or more first switching control signals to one or more power switches in the switched bypass pre-charging path to actively pre-charge the inverter capacitor to a threshold voltage level.

9. The method of claim 8, further comprising:
measuring, at each of the plurality of discrete charging intervals, the inverter capacitor voltage value across first and second inverter terminals of the inverter; and
connecting the first battery terminal to the first inverter terminal and disconnecting the switched bypass pre-charging path when the inverter capacitor voltage value reaches the threshold voltage level.

10. The method of claim 8 or 9, further comprising generating, from the one or more first switching control signals, one or more boosted first switching control signals which are provided to control the one or more power switches in the switched bypass pre-charging path.

11. The method of any of claims 8 to 10, where a high-power control unit is connected and configured to make low-frequency measurements of the battery voltage value and the inverter capacitor voltage value.

12. The method of any of claims 8 to 11, where the battery voltage value and inverter capacitor voltage value are measured approximately once every millisecond.

13. The method of any of claims 8 to 12, where each of the plurality of discrete charging intervals has a duration of approximately one millisecond.

14. The method of any of claims 8 to 13, where the one or more first switching control signals for each of the plurality of discrete charging intervals are generated with configurable duty cycles that are fixed for each of the plurality of discrete charging intervals.

15. The method of any of claims 8 to 14, where the one or more first switching control signals for each of the plurality of discrete charging intervals are generated with configurable duty cycles that vary based on a pre-determined shape which causes the one or more power switches to generate a substantially constant pre-charging current for charging the inverter capacitor.
